# EUROPÄISCHE PATENTANMELDUNG

(11) **EP 0 749 858 A2**
(43) Veröffentlichungstag der Anmeldung: **27.12.1996**
(21) Anmeldenummer: 96106488.8
(22) Anmeldetag: 25.04.1996
(51) Int. Cl.: B60H 1/32

(54) **Betriebsverfahren zur Vermeidung einer Verdampfervereisung**

(30) Priorität: 22.06.1995 DE 19522666
(71) Anmelder: Bayerische Motoren Werke Aktiengesellschaft, 80788 München (DE)
(72) Erfinder: Schmidt, Wolfgang, 86633 Neuburg (DE); Zimny, Konrad, 85419 Mauern (DE)

(57) **Zusammenfassung**

Bei einem Betriebsverfahren zur Vermeidung einer Verdampfervereisung für eine einen Kältemittel-Verdampfer und einen Klimakompressor aufweise Klimaanlage in Kraftfahrzeugen werden eine der Verdampfertemperatur proportionale Größe und eine der momentan angeforderten Kälteleistung proportionale Größe erfaßt. Daraufhin wird die Zu- und Abschaltung des Klimakompressors in Abhängigkeit von der der Verdampfertemperatur proportionalen Größe und von der der momentan angeforderten Kälteleistung proportionalen Größe vorgenommen. Vorzugsweise wird die Zu- und Abschaltung des Klimakompressors derart vorgenommen, daß eine vorgegebene, vorzugsweise mittlere, Verdampfertemperatur erreicht wird.

## Beschreibung

Die Erfindung bezieht sich auf ein Betriebsverfahren zur Vermeidung einer Verdampfervereisung nach dem Oberbegriff des Patentanspruchs 1.

Ein derartiges Betriebsverfahren ist beispielsweise aus der DE 41 02 485 A1 bekannt. An einem von einem Kältemittel durchströmten Verdampfer einer Fahrzeug-Klimaanlage schlägt sich bekanntermaßen Feuchtigkeit nieder, die in dem den Verdampfer durchströmenden Luftstrom enthalten ist. Nähert sich die Temperatur der den Verdampfer durchströmenden Luft aufgrund niedriger Umgebungstemperaturen dem Gefrierpunkt von Wasser, so wird an bekannten Fahrzeugklimaanlagen der Kältemittelkreislauf, d.h. insbesondere der Klimakompressor, mittels geeigneter Temperaturschalter bzw. Sensoren abgeschaltet, um eine die Funktionsfähigkeit einer Klimaanlage beeinträchtigende Vereisung des Verdampfers zu verhindern. Zur Vermeidung der Verdampfervereisung ist aus der DE 41 02 485 A1 bekannt, dem Verdampfer bei Aufrechterhaltung des Kältemittelkreislaufes Wärme zuzuführen. Hierzu ist eine besondere Vorrichtung zur Anordnung eines speziellen Heizelements oder zur Erzeugung eines wärmenden Luftstroms nötig.

Es ist Aufgabe der Erfindung, ein Betriebsverfahren eingangs genannter Art derart zu verbessern, daß eine Verdampfervereisung sicher verhindert wird, ohne bei bestehenden Klimaanlagen zusätzliche Vorrichtungen anzuordnen.

Diese Aufgabe wird durch die kennzeichnenden Merkmale des Patentanspruchs 1 gelöst.

Erfindungsgemäß werden eine der Verdampfertemperatur proportionale Größe, insbesondere die Verdampfertemperatur selbst, und eine der momentan angeforderten Kälteleistung proportionale Größe, insbesondere die Außentemperatur, erfaßt. In Abhängigkeit von diesen beiden Größen wird die Zu- und Abschaltung des Klimakompressors bzw. des Kältemittelkreislaufes vorgenommen.

Vorzugsweise wird hierbei das Zu- und Abschalten des Klimakompressors jeweils in Abhängigkeit von Verdampfertemperaturschwellen vorgenommen, die dynamisch in Abhängigkeit von der der momentan angeforderten Kälteleistung proportionalen Größe verändert und an die jeweilige Betriebsbedingung der Klimaanlage angepaßt werden. Dies bedeutet, daß die Zuschalt- und Abschalt-Schwellen des Klimakompressors kälteleistungsadaptiv definiert werden. Im Gegensatz hierzu sind lediglich Systeme bekannt, die nur eine Zuschalt- und Abschalt-Schwelle für je einen fest vorgegebenen Verdampfertemperaturwert vorsehen. Bei diesen bekannten Systemen werden zwar die Zuschalt- und Abschalt-Schwelle derart gewählt, daß eine Vereisung des Verdampfers verhindert wird, jedoch wird bei hoher Kältelast das Kühlungspotential des Verdampfers nicht vollständig ausgenützt, da in diesem Falle tiefere Verdampfertemperaturen ohne Vereisungsgefahr zugelassen werden könnten.

Somit wird durch das erfindungsgemäße Betriebsverfahren nicht nur die Vereisung des Verdampfers auf einfache und kostengünstige Weise verhindert, sondern auch das Kühlungspotential des Verdampfers, insbesondere im Falle von hohen Außentemperaturen, d.h. hoher Kältelast, optimal ausgenutzt.

Eine vorteilhafte Ausgestaltung der Erfindung ist der Gegenstand des Patentanspruchs 2.
Hierbei wird die Zu- und Abschaltung des Klimakompressors derart vorgenommen, daß eine vorgegebene, vorzugsweise mittlere, Verdampfertemperatur erreicht wird.
Durch diese Regelung wird der Nachteil beseitigt, der bei einer fest vorgegebenen Zuschalt- und Abschalt-Schwelle lediglich zur Vermeidung einer Verdampfervereisung entsteht, nämlich daß bei niedriger Kälteleistung, d.h. bei besonders großer Vereisungsgefahr, starke Unterschwinger der Verdampfertemperatur in Richtung kalt sowie bei hoher Kälteleistung, d.h. z.B. bei hoher Außentemperatur, starke Überschwinger der Verdampfertemperatur in Richtung warm auftreten. Diese starken Temperaturschwankungen wirken sich in unkomfortabler Weise auf die Temperaturregelung des Fahrzeuginnenraums aus. Somit wird durch die erfindungsgemäße Regelung auf eine vorgegebene Verdampfertemperatur auch die Temperaturregelung im Innenraum des Kraftfahrzeuges verbessert.

Eine weitere vorteilhafte Ausgestaltung der Erfindung ist der Gegenstand des Patentanspruchs 3.
Weiterhin wird die Zu- und Abschaltung des Klimakompressors derart vorgenommen, daß eine vorgegebene minimale Zeitspanne zwischen jedem Schaltwechsel, d.h. einem Wechsel von einem zugeschalteten in einen abgeschalteten Zustand als auch von einem abgeschalteten in einen zugeschalteten Zustand des Klimakompressors, nicht unterschritten wird.

Mit dieser erfindungsgemäßen Weiterbildung wird ein zu häufiges Takten, d.h. Zu- und Abschalten des Klimakompressors, das zur akustischen Störgeräuschen oder zu unkomfortablen Drehzahländerungen der Brennkraftmaschine führen kann, verhindert.

Zusammengefaßt wird durch die Erfindung ein Betriebsverfahren für Klimaanlagen geschaffen, das eine Verdampfervereisung auf einfache Weise vermeidet, das Kühlungspotential des Verdampfers jedoch vollständig ausnutzt und zudem den Gesamtkomfort des Fahrzeugs erhöht.

In der Zeichnung ist ein Ausführungsbeispiel der Erfindung dargestellt. Es zeigt
- Fig. 1: ein Betriebsverfahren zur Vermeidung einer Verdampfervereisung nach dem Stand der Technik und
- Fig. 2: ein Betriebsverfahren zur Vermeidung einer Verdampfervereisung gemäß der vorliegenden Erfindung.

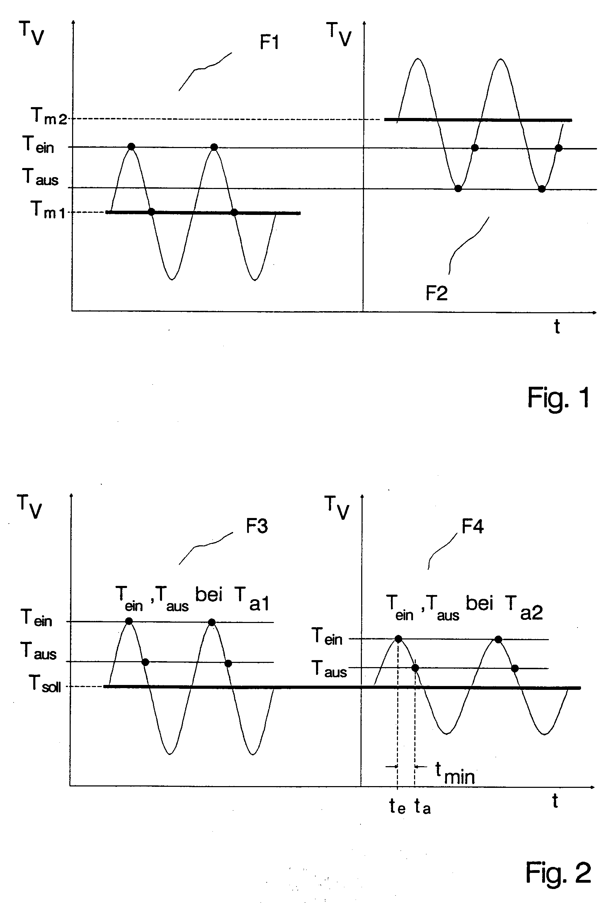

In Fig. 1 ist auf der Abszisse die Zeit t und auf der Ordinate die momentan ermittelte Verdampfertemperatur T_{V} aufgetragen. In dem Diagramm nach Fig. 1 ist eine fest vorgegebene Zuschaltschwelle des Kompressors bei der fest definierten Einschalt-Verdampfertemperatur Tₑᵢₙ und eine fest vorgegebene Abschaltschwelle für den Kompressor bei der fest definierten Ausschalt-Verdampfertemperatur Tₐᵤₛ eingetragen.

Im linken Bereich des Diagramms nach Fig. 1 ist ein erster Fall F1 dargestellt, in dem lediglich eine geringe Kälteleistung angefordert ist, da beispielsweise eine niedrige Außentemperatur und ein geringer Luftdurchsatz vorliegt. Ist beispielsweise der Klimakompressor ausgeschaltet, steigt die Ist-Verdampfertemperatur T_{V} solange an, bis die Einschalt-Verdampfertemperatur Tₑᵢₙ erreicht ist. Durch die Kühlung mittels des Kältemittelkreislaufes sinkt daraufhin die Ist-Verdampfertemperatur T_{V} nahezu unverzögert ab, wenn entsprechend dem Fall F1 eine niedrige Außentemperatur vorliegt. Unterschreitet die Ist-Verdampfertemperatur T_{V} daraufhin die Ausschalt-Verdampfertemperatur Tₐᵤₛ, wird der Klimakompressor wieder ausgeschaltet. Durch die niedrige Außentemperatur im Fall F1 tritt daraufhin ein starker Unterschwinger der Ist-Verdampfertemperatur T_{V} in Richtung kalt auf, bevor die Ist-Verdampfertemperatur T_{V} nach dem Ausschaltvorgang des Klimakompressors verzögert wieder ansteigt. Im Fall F1, d.h. bei nur geringer angeforderter Kälteleistung bzw. bei niedriger Außentemperatur und/oder geringem Luftdurchsatz stellt sich eine mittlere Verdampfertemperatur Tₘ₁ ein, die unterhalb der Ausschalt-Verdampfertemperatur Tₐᵤₛ liegt.

Im rechten Bereich des Diagramms nach Fig. 1 ist der Fall F2 dargestellt, in dem eine hohe Kälteleistung, insbesondere aufgrund einer hohen Außentemperatur und/oder eines hohen Luftdurchsatzes, angefordert wird. Die Einschalt- und Ausschalt-Verdampfertemperaturschwellen Tₑᵢₙ und Tₐᵤₛ bleiben unabhängig von der Kälteleistung konstant. Der Verlauf der Ist-Verdampfertemperatur T_{V} beginnt bei eingeschaltetem Zustand des Klimakompressors. Der Klimakompressor wird solange eingeschaltet, bis die Ist-Verdampfertemperatur T_{V} von oben die Ausschalt-Verdampfertemperatur Tₐᵤₛ erreicht hat. Daraufhin wird der Klimakompressor ausgeschaltet und die Ist-Verdampfertemperatur T_{V} steigt nahezu unverzüglich an. Wird daraufhin die Einschalt-Verdampfertemperatur Tₑᵢₙ erreicht, wird der Klimakompressor wieder ausgeschaltet. In diesem Fall F2, d.h. bei hoher Außentemperatur, treten insbesondere Überschwinger der Verdampfertemperatur T_{V} in Richtung warm auf, wodurch die mittlere Verdampfertemperatur Tₘ₂ deutlich oberhalb der Einschalt-Verdampfertemperatur Tₑᵢₙ liegt. Dies bedeutet, daß im Fall F2 das Kühlungspotential des Verdampfers nicht vollständig ausgenutzt wird, da in diesem Fall tiefere Verdampfertemperaturen T_{V} ohne Vereisungsgefahr zugelassen werden könnten. Um diesen Nachteil bei dem in Fig. 1 dargestellten Stand der Technik zu verhindern, wird erfindungsgemäß nach einem Betriebsverfahren vorgegangen, das beispielsweise in Fig. 2 dargestellt ist.

In Fig. 2 sind mit der Fig. 1 übereinstimmende Größen mit gleichen Bezugszeichen versehen. Im linken Bereich des Diagramms nach Fig. 2 ist mit dem Fall F3 eine Betriebsbedingung dargestellt, bei der eine geringe Kälteleistung angefordert wird, da insbesondere niedrige Außentemperaturen und ein geringer Luftdurchsatz vorliegen. Weiterhin soll in Fig. 2 die Außentemperatur Tₐ als eine der momentan angeforderten Kälteleistung proportionale Größe erfaßt werden. Im Fall F3 liegt also eine niedrige Außentemperatur Tₐ₁ vor. Die Einschalt-Verdampfertemperatur Tₑᵢₙ sowie die Ausschalt-Verdampfertemperatur Tₐᵤₛ werden entsprechend der momentan ermittelten Außentemperatur Tₐ₁ adaptiv dynamisch festgesetzt. Weiterhin ist eine mittlere Soll-Verdampfertemperatur Tₛₒₗₗ eingetragen, die erfindungsgemäß zumindest nahezu konstant gehalten werden soll. Die Zu- und Abschaltung des Klimakompressors wird entsprechend der Einschalt- und Ausschalt-Verdampfertemperaturen Tₑᵢₙ und Tₐᵤₛ vorgenommen, die jedoch in Abhängigkeit von der Außentemperatur Tₐ₁ und der vorgegebenen mittleren Soll-Verdampfertemperatur Tₛₒₗₗ variabel einstellbar sind.

Im rechten Bereich der Fig. 2 ist im Fall F4 eine hohe Kälteleistung angefordert. Die Außentemperatur Tₐ₂ ist im Fall F4 höher als die Außentemperatur Tₐ₁ im Fall F3. Entsprechend dieser höheren Außentemperatur Tₐ₂ und der gleichbleibend vorgegebenen mittleren Soll-Verdampfertemperatur Tₛₒₗₗ werden neue Einschalt- und Ausschaltverdampfertemperaturen Tₑᵢₙ und Tₐᵤₛ vorgegeben. In einer Weiterbildung der Erfindung kann zu dem die Häufigkeit des Zu- und Abschaltens des Klimakompressors derart beeinflußt werden, das insbesondere zwischen dem Einschaltzeitpunkt tₑ und dem darauffolgenden Ausschaltzeitpunkt tₐ eine vorgegebene minimale Zeitspanne tₘᵢₙ nicht unterschritten wird.

Durch das erfindungsgemäße Ausführungsbeispiel gemäß Fig. 2 ist ein optimales Betriebsverfahren geschaffen, das die Verdampfervereisung verhindert, das Kühlungspotential des Verdampfers optimal ausnutzt und zudem den allgemeinen Fahrkomfort beibehält.

## Patentansprüche

1. Betriebsverfahren zur Vermeidung einer Verdampfervereisung für eine einen Kältemittel-Verdampfer und einen Klimakompressor aufweisende Klimaanlage in Kraftfahrzeugen, dadurch gekennzeichnet, daß eine der Verdampfertemperatur proportionale Größe (T_{V}) und eine der momentan angeforderten Kälteleistung proportionale Größe (Tₐ; Tₐ₁, Tₐ₂) erfaßt werden und daß die Zu- und Abschaltung des Klimakompressors in Abhängigkeit von der der Verdampfertemperatur proportionalen Größe (T_{V}; Tₑᵢₙ, Tₐᵤₛ) und von der der momentan angeforderten Kälteleistung proportionalen Größe (Tₐ; Tₐ₁, Tₐ₂) vorgenommen wird.

2. Betriebsverfahren nach Patentanspruch 1, dadurch gekennzeichnet, daß die Zu- und Abschaltung des Klimakompressors derart vorgenommen wird, daß eine vorgegebene, vorzugsweise mittlere, Verdampfertemperatur (Tₛₒₗₗ), erreicht wird.

3. Betriebsverfahren nach Patentanspruch 1 oder 2, dadurch gekennzeichnet, daß die Zu- und Abschaltung des Klimakompressors derart vorgenommen wird, daß eine vorgegebene minimale Zeitspanne (tₘᵢₙ) zwischen jedem Schaltwechsel nicht unterschritten wird.
